# EUROPÄISCHE PATENTANMELDUNG

(11) **EP 4 360 417 A1**
(43) Veröffentlichungstag der Anmeldung: **01.05.2024**
(21) Anmeldenummer: 22203502.4
(22) Anmeldetag: 25.10.2022
(51) Int. Cl.: A01B 61/04, A01B 19/10, A01B 35/24

(54) **LANDWIRTSCHAFTLICHES ARBEITSGERÄT ZUM BEARBEITEN EINES BODENS**

(71) Anmelder: Einböck Beteiligungs-GmbH, 4751 Dorf an der Pram (AT)
(72) Erfinder: GURTNER, Johannes, 4983 St. Georgen bei Obernberg (AT)
(74) Vertreter: Weickmann & Weickmann PartmbB

(57) **Zusammenfassung**

Die vorliegende Erfindung betrifft ein landwirtschaftliches Arbeitsgerät (1) zum Bearbeiten eines Bodens (28), umfassend wenigstens ein um eine Schwenkachse (4) auslenkbares Arbeitswerkzeug (2) und eine Andrückvorrichtung (3) zum Andrücken des wenigstens einen Arbeitswerkzeuges (2) an den Boden, wobei die Andrückvorrichtung eine Druckfeder (5) und eine Zugfeder (6) zum Erzeugen einer Andruckkraft aufweist, und wobei mit Beginn der Auslenkbewegung des Arbeitswerkzeuges (2) zunächst die Druckfeder (5) zumindest teilweise komprimiert wird und ab Erreichen einer Schwellwertauslenkung des Arbeitswerkzeuges (2) die Zugfeder (6) gedehnt wird, wobei die Druckfeder (5) außerhalb der Zugfeder (6) angeordnet ist, ein von der Zugfeder abgewandtes Druckfederende (7) derart mittels einer Zugstange (8) mit der Zugfeder (6) verbunden ist, dass ein Ziehen an einem von der Druckfeder (5) abgewandten Zugfederende (9) eine Zugkraft auf das abgewandte Druckfederende (7) bewirkt, und sich ein der Zugfeder (6) zugewandtes Druckfederende (10) an einem Einstellelement (11) zum Einstellen der Vorspannung der Druckfeder (5) abstützt, wobei das Einstellelement (11) zwischen dem zugewandten Druckfederende (10) und einem der Druckfeder (5) zugewandten Zugfederende (12) angeordnet ist.

## Beschreibung

### I. Anwendungsgebiet

Die vorliegende Erfindung betrifft ein landwirtschaftliches Arbeitsgerät zum Bearbeiten eines Bodens, welches wenigstens ein um eine Schwenkachse auslenkbares Arbeitswerkzeug aufweist. Bei dem Arbeitswerkzeug kann es sich beispielsweise um einen Zinken handeln.

### II. Technischer Hintergrund

Aus der EP 2 656 708 A1 ist ein Zinkenstriegel mit mehreren verschwenkbar angeordneten Striegelzinken bekannt. Mittels einer Andrückvorrichtung wird jeweils jeder Striegelzinken gegen einen Anschlag vorgespannt. Die Andrückvorrichtung besteht aus einer Zugfeder mit größerer Federsteifigkeit und einer Druckfeder mit kleinerer Federsteifigkeit. Die Druckfeder ist koaxial innerhalb des Hohlraumes der Zugfeder angeordnet. Zum Einstellen der Vorspannung der innenliegenden Druckfeder ist ein in die außenliegende Zugfeder hineingeführtes Zugseil vorhanden, an welchem gezogen wird, wenn eine größere Vorspannung der Druckfeder eingestellt werden soll.

Bei der bekannten Andrückvorrichtung ist es zum einen nachteilig, dass die Reparatur im Falle eines Reißens des Zugseiles verhältnismäßig aufwendig ist. Zum anderen ist die bekannte Andrückvorrichtung mit dem Nachteil verbunden, dass die innenliegende Druckfeder nicht durch eine einfache Sichtprüfung auf Verschleißerscheinungen geprüft werden kann.

### III. Darstellung der Erfindung

### a) Technische Aufgabe

Es ist daher die Aufgabe der vorliegenden Erfindung ein landwirtschaftliches Arbeitsgerät zum Bearbeiten eines Bodens zu schaffen, bei welchem eine Andrückvorrichtung zum Andrücken eines jeweiligen Arbeitswerkzeuges an den Boden im Falle eines Defektes auf einfache Weise repariert werden kann und eine Prüfung der Federn der Andrückvorrichtung auf Verschleißerscheinungen unkompliziert möglich ist.

### b) Lösung der Aufgabe

Diese Aufgabe wird mit einem landwirtschaftlichen Arbeitsgerät mit den Merkmalen des Anspruchs 1 gelöst. Weitere Ausgestaltungen der vorliegenden Erfindung ergeben sich aus den Unteransprüchen.

Erfindungsgemäß wird ein landwirtschaftliches Arbeitsgerät zum Berarbeiten eines Bodens vorgeschlagen, welches wenigstens ein um eine Schwenkachse auslenkbares Arbeitswerkzeug und eine Andrückvorrichtung zum Andrücken des wenigstens einen Arbeitswerkzeuges an den Boden aufweist. Bei dem Arbeitswerkzeug kann es sich beispielsweise um einen Zinken handeln.

Die Andrückvorrichtung umfasst wenigstens eine Druckfeder und wenigstens eine Zugfeder zum Erzeugen einer Andruckkraft, welche das Arbeitswerkzeug im Falle seiner Auslenkung aus einer Anschlagstellung in Richtung des Bodens drückt und auf diese Weise danach trachtet, das Arbeitswerkzeug wieder zurück in seine Anschlagstellung zu bewegen.

Dabei weist die Druckfeder eine geringere Federsteifigkeit bzw. ein geringeres Elastizitätsmodul als die Zugfeder auf. Die Zugfeder ist dementsprechend steifer als die Druckfeder. Daher wird mit Beginn der Auslenkbewegung des Arbeitswerkzeuges zunächst die Druckfeder zumindest teilweise komprimiert. Erst ab Erreichen einer Schwellwertauslenkung des Arbeitswerkzeuges wird zusätzlich zu dem Zusammendrücken der Druckfeder die Zugfeder gedehnt. Die Größe der Schwellwertauslenkung kann durch entsprechende Wahl des Verhältnisses der Federsteifigkeit der Druckfeder zu der Federsteifigkeit der Zugfeder vorgegeben bzw. abgestimmt werden.

Erfindungsgemäß ist die Druckfeder außerhalb der Zugfeder angeordnet. Ein von der Zugfeder abgewandtes Druckfederende ist derart mittels einer Zugstange mit der Zugfeder verbunden, dass ein Ziehen an einem von der Druckfeder abgewandten Zugfederende eine Zugkraft auf das abgewandte Druckfederende bewirkt. Des Weiteren stützt sich ein der Zugfeder zugewandtes Druckfederende an einem Einstellelement zum Einstellen der Vorspannung der Druckfeder ab. Dieses Einstellelement ist zwischen dem zugewandten Druckfederende und einem der Druckfeder zugewandten Zugfederende angeordnet.

Ein Brechen der Zugstange ist unwahrscheinlich. Sollte dies dennoch passieren, so kann die gebrochene Zugstange mit im Vergleich zum Stand der Technik vergleichsweise geringem Aufwand durch eine neue Zugstange ersetzt werden. Darüber hinaus ermöglicht die Anordnung der Druckfeder außerhalb der Zugfeder eine einfach zu bewerkstelligende Sichtprüfung beider Federn auf Verschleißerscheinungen.

Vorzugsweise wird die Längsachse der Druckfeder derart angeordnet, dass sie mit der Längsachse der Zugfeder fluchtet. Die Zugstange kann in diesem Fall vollkommen geradlinig verlaufend gestaltet werden, d.h. ohne Versatz oder Krümmung.

Vorteilhaft ist es, wenn das Einstellelement zum Einstellen der Vorspannung der Druckfeder von der Zugstange durchsetzt wird. Die Zugstange ist dadurch in dem Einstellelement selbst relativ zu diesem bewegbar geführt.

Besonders vorteilhaft ist es, das Arbeitsgerät mit einem kraftunterstützten Betätigungsorgan, beispielsweise einem Hydraulikzylinder, auszustatten, mittels welchem das Einstellelement in verschiedene Einstellpositionen relativ zu dem von der Zugfeder abgewandten Druckfederende bewegbar ist. Dabei bewirken verschiedene Einstellpositionen des Einstellelements, d.h. verschiedene Abstände des Einstellelements von dem abgewandten Druckfederende bzw. verschiedene Abstände des der Zugfeder zugewandten Druckfederendes von dem der Zugfeder abgewandten Druckfederende, jeweils eine unterschiedliche Vorspannung der Druckfeder.

Das Einstellelement kann in vorteilhafter Weise an wenigstens einem Schlittenelement gelagert sein, welches zum Bewegen des Einstellelements in verschiedene Einstellpositionen mittels des kraftunterstützten Betätigungsorgans verfahrbar ist. Dabei kann das wenigstens eine Schlittenelement in einer Langlochführung verfahrbar gelagert sein.

### c) Ausführungsbeispiel

Nachfolgend wird ein Ausführungsbeispiel der vorliegenden Erfindung beispielhaft anhand der beigefügten Zeichnungen beschrieben. Es zeigen:
- Fig. 1:: eine Seitenansicht eines Ausführungsbeispiels des landwirtschaftlichen Arbeitsgeräts;
- Fig. 2:: einen vergrößerten Teilbereich aus Fig. 1;
- Fig. 3:: eine Seitenansicht ähnlich Fig. 1, wobei eine von Fig. 1 abweichende Vorspannung der Druckfeder eingestellt ist; und
- Fig. 4:: eine perspektivische Teilansicht auf das Ausführungsbeispiel gemäß Fig. 1 von schräg oben.

In den Zeichnungen kennzeichnen gleiche Bezugszeichen gleiche Teile. Die Zeichnungen zeigen ein Ausführungsbeispiel für ein landwirtschaftliches Arbeitsgerät 1, welches für eine Vielzahl von Arbeitswerkzeugen in Form jeweils eines Zinken 2 vorgesehen ist. In jeder Zeichnung ist zum Zwecke der zeichnerischen Vereinfachung jeweils nur ein einziger Zinken 2 dargestellt.

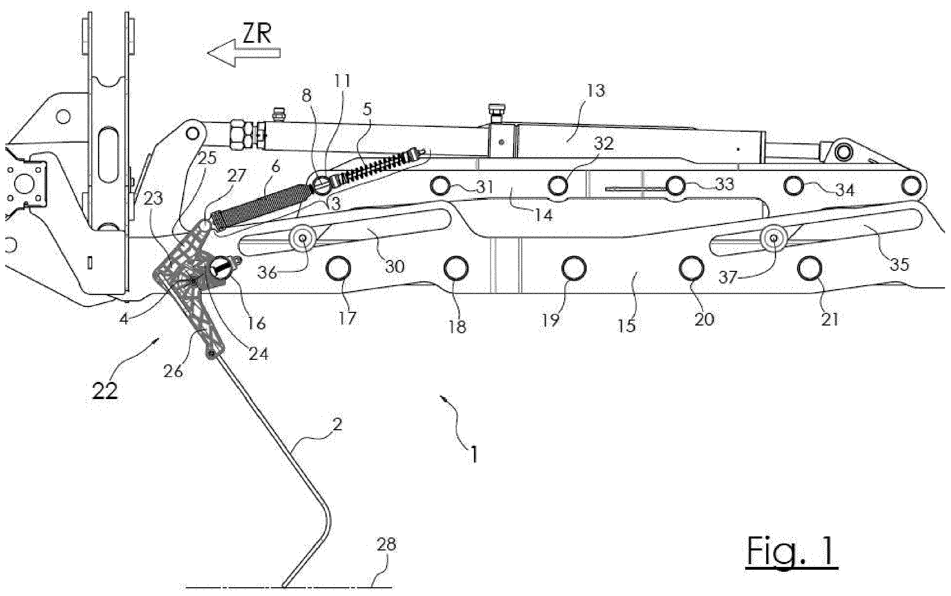

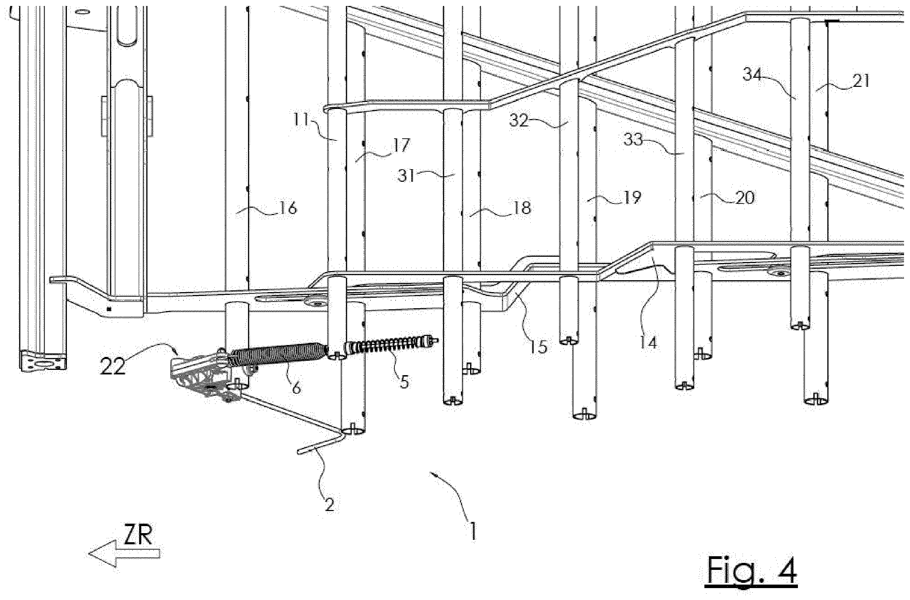

Insbesondere in den Fig. 1, 3 und 4 ist ein länglicher Grundträger 15 zu sehen, der sich in den vorgenannten Figuren im Wesentlichen horizontal erstreckt und somit im Wesentlichen parallel zu der Zugrichtung eines in den Figuren nicht gezeigten Zugfahrzeuges verläuft. Die Zugrichtung des Zugfahrzeuges ist in den Figuren durch den Pfeil ZR gekennzeichnet. Ein zweiter Grundträger, der dem gezeigten Grundträger 15 spiegelbildlich entspricht, befindet sich bei dem gezeigten Ausführungsbeispiel außerhalb des oberen Endes der Fig. 4 und ist daher zeichnerisch nicht dargestellt.

An dem Grundträger 15 bzw. dem nicht gezeigten, weiteren Grundträger ist eine Vielzahl von Trägerstangen befestigt. In den Zeichnungen des gezeigten Ausführungsbeispiels sind sechs Trägerstangen 16, 17, 18, 19, 20 und 21 zu sehen. An jeder der Trägerstangen 16 bis 21 können mehrere Schwenklagereinrichtungen 22 zum Verschwenken eines jeweiligen Zinken 2 um eine jeweilige Schwenkachse 4 montiert werden. In Fig. 4 sind an jeder der Trägerstangen 16 bis 21 entsprechende Bohrungen zu sehen, die nicht weiter mit Bezugszeichen versehen sind, voneinander gleichmäßig beabstandet sind und jeweils der Montage einer Schwenklagereinrichtung 22 dienen können.

Die Schwenklagereinrichtung 22 weist bei dem gezeigten Ausführungsbeispiel ein Winkelhebelteil 23 und ein Anschlagteil 24 auf. Bei der in den Zeichnungen beispielhaft gezeigten Schwenklagereinrichtung 22 ist das Anschlagteil 24 drehfest an der Trägerstange 16 befestigt. Wie zu erkennen ist, erfolgt diese Befestigung hier durch Verschraubung des Anschlagteils 24 mit der Trägerstange 16. Das Winkelhebelteil 23 der Schwenklagereinrichtung 22 ist um eine Schwenkachse 4 schwenkbar bzw. drehbar an dem Anschlagteil 24 gelagert. Die Schwenkachse 4 verläuft in den Fig. 1 bis 3 senkrecht zur jeweiligen Zeichenebene.

Das schwenkbar gelagerte Winkelhebelteil 23 weist einen ersten Hebelarm 25 und einen zweiten Hebelarm 26 auf, wie am besten in den Fig. 1 bis 3 zu sehen ist. An dem zweiten Hebelarm 26 ist der Zinken 2 derart befestigt, dass er sich im Betrieb des Arbeitsgeräts 1 mit Ausnahme eines vorzugsweise elastischen Verbiegens relativ zu dem zweiten Hebelarm 26 nicht bewegen kann. An ein freies Ende des ersten Hebelarms 25 ist eine Zugfeder 6 angelenkt. Das entsprechende Gelenk 27 ist am besten in den Fig. 1 bis 3 zu erkennen.

Die Zugfeder 6 ist Bestandteil einer Andrückeinrichtung 3, die neben der hier als Schraubenfeder ausgebildeten Zugfeder 6 auch eine hier ebenso als Schraubenfeder ausgebildete Druckfeder 5 umfasst. Die Andrückvorrichtung 3 dient dazu, eine Andruckkraft zu erzeugen, mit welcher der Zinken 2 gegen einen landwirtschaftlichen Boden 28 gedrückt wird, wenn der Zinken 2 während des bestimmungsgemäßen Betriebs des Arbeitsgeräts 1 aus seiner in den Fig. 1 bis 4 gezeigten Anschlagstellung ausgelenkt wird.

Die Andrückvorrichtung 3 spannt das Winkelhebelteil 23 in den Fig. 1 bis 3 im Uhrzeigersinn um die Schwenkachse 4 gegen das Anschlagteil 24 vor. Dabei liegt der erste Hebelarm 25 des Winkelhebelteils 23 an einer Anschlagfläche 29 des Anschlagteils 24 an. Diese Stellung des Winkelhebelteils 23 ist in den Fig. 1 bis 3 gezeigt und wird vorliegend als Anschlagstellung bezeichnet. Das Winkelhebelteil 23 und der Zinken 2 können sich in dieser Stellung in den Fig. 1 bis 3 nicht weiter im Uhrzeigersinn um die Schwenkachse 4 drehen.

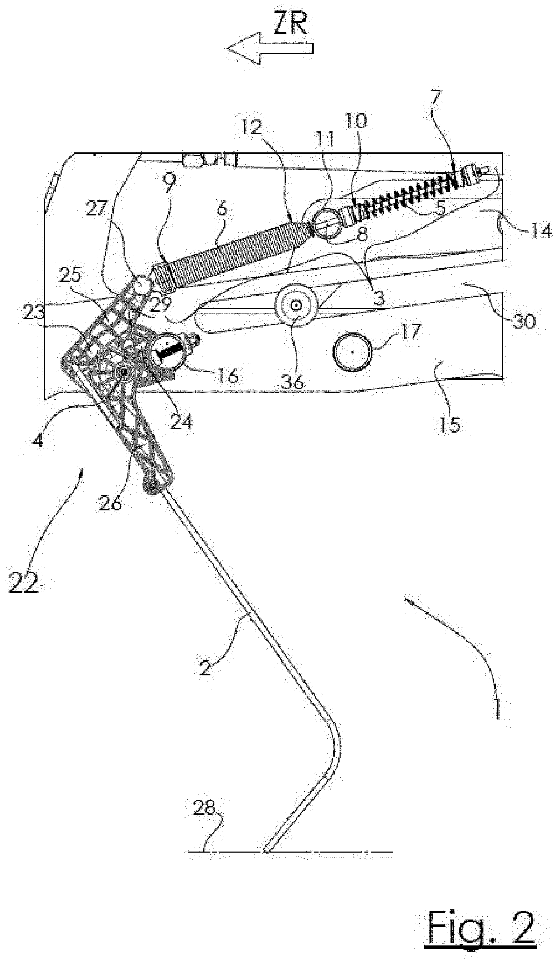

Wie zu erkennen ist, sind die Druckfeder 5 und die Zugfeder 6 der Andrückvorrichtung 3 in besonderer Weise angeordnet. Die Längsachsen der beiden Federn 5 und 6 fluchten bei dem gezeigten Ausführungsbeispiel miteinander, wie in den Zeichnungen zu sehen ist. Dadurch ist es möglich, eine gerade Zugstange 8 vorzusehen, welche durch den Innenraum der Druckfeder 5 hindurch verläuft und an einem der Druckfeder 5 zugewandten Zugfederende 12 (siehe Fig. 2) der Zugfeder 6 befestigt ist. Dabei kann der innere Hohlraum der Zugfeder 6 vollkommen leer bleiben. Die Zugstange 8 muss sich nicht in den inneren Hohlraum der Zugfeder 6 hinein erstrecken. Es ist lediglich zu gewährleisten, dass die Zugstange 8 sicher an dem Zugfederende 12 befestigt ist.

Ein von der Zugfeder 6 abgewandtes Druckfederende 7 (siehe Fig. 2) der Druckfeder 5 stützt sich an dem in den Fig. 1 bis 3 rechten Ende der Zugstange 8 ab. Ein der Zugfeder 6 zugewandtes Druckfederende 10 (siehe Fig. 2) der Druckfeder 5 stützt sich an einem Einstellelement zum Einstellen der Vorspannung der Druckfeder 5 ab, das bei dem gezeigten Ausführungsbeispiel von einer Einstellstange 11 gebildet wird, die in den Fig. 1 bis 3 im Querschnitt und in Fig. 4 in einer Ansicht von schräg oben zu sehen ist.

In Fig. 4 sind noch weitere Einstellstangen 31, 32, 33 und 34 zu erkennen. An jeder der Einstellstangen 11 und 31 bis 34 können jeweils mehrere Andrückeinrichtungen 3 angebracht werden, wie in Fig. 4 anhand der nicht weiter mit Bezugszeichen versehenen und gleichmäßig beabstandeten Bohrungen in den Einstellstangen 11 und 31 bis 34 zu sehen ist.

Wie in den Figuren zu sehen ist, wird das Einstellelement in Form der Einstellstange 11 bei dem gezeigten Ausführungsbeispiel von der Zugstange 8 durchsetzt. Des Weiteren ist die Einstellstange 11 zwischen der Zugfeder 6 und der Druckfeder 5 angeordnet, sodass die Einstellstange 11 die Zugfeder 6 und die Druckfeder 5 voneinander trennt bzw. voneinander beabstandet. Dabei stützt sich das der Zugfeder 6 zugewandte Druckfederende 10 (siehe Fig. 2) der Druckfeder 5 an der Einstellstange 11 ab.

Das hier in Form der Einstellstange 11 gestaltete Einstellelement ist relativ zu der Zugstange 8 bewegbar. Erfolgt in den Fig. 1 und 2 eine Bewegung der Einstellstange 11 nach rechts oben, so wird dadurch das Druckfederende 10 in Richtung des Druckfederendes 7 bewegt, d.h. die Druckfeder 5 wird zunehmend komprimiert und dementsprechend mit einer größeren Druckfederkraft vorgespannt.

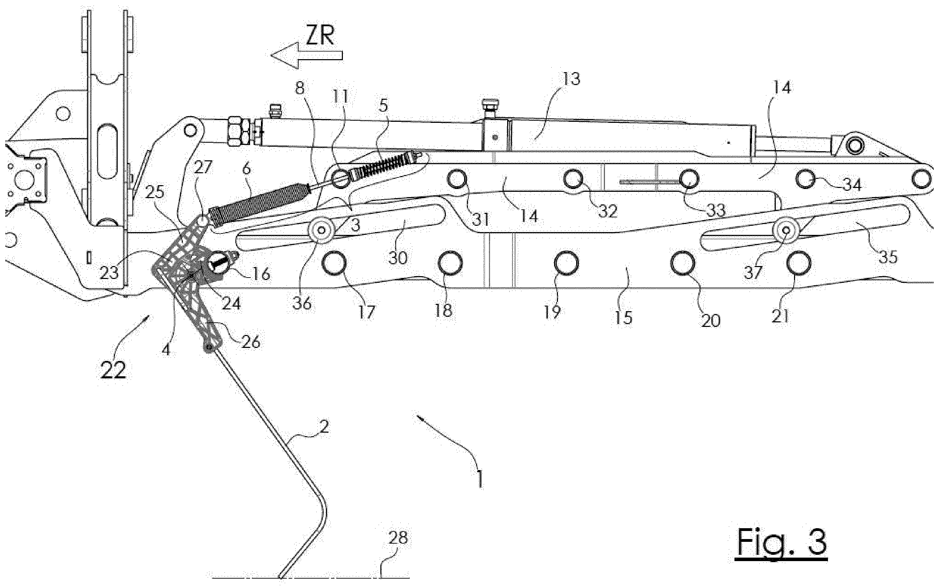

Eine Konfiguration, bei welcher ausgehend von der in den Fig. 1 und 2 gezeigten Konfiguration die Einstellstange 11 entlang der Zugstange 8 nach rechts oben bewegt wurde, ist in Fig. 3 dargestellt. Wie zu erkennen ist, weist die Einstellstange 11 in der Konfiguration gemäß Fig. 3 im Gegensatz zu derjenigen in den Fig. 1 und 2 einen Abstand von dem Zugfederende 12 der Zugfeder 6 auf. Die Druckfeder 5 ist in Fig. 3 stärker zusammengedrückt als in den Fig. 1 bzw. 2 und entfaltet in der Konfiguration gemäß Fig. 3 eine größere Druckvorspannkraft als in derjenigen gemäß Fig. 1 bzw. 2.

Sowohl in der Konfiguration gemäß der Fig. 1 und 2 als auch in der Konfiguration gemäß Fig. 3 liegt der erste Hebelarm 25 des Winkelhebelteils 23 an der Anschlagfläche 29 des Anschlagteils 24 an. In der Konfiguration gemäß Fig. 1 und 2 ist die Druckfeder 5 bereits etwas komprimiert und bewirkt eine erste Druckvorspannkraft, die das Druckfederende 7 in den Fig. 1 und 2 nach rechts oben drückt. Da sich das Druckfederende 7 an der Zugstange 8 abstützt, wird somit die Zugstange 8 in den Fig. 1 und 2 nach rechts oben gezogen. Die in der Zugstange 8 wirkende Zugkraft wird schließlich auf das Zugfederende 12 der Zugfeder 6 übertragen.

Die Zugfeder 6 weist im Rahmen der vorliegenden Erfindung eine größere Federsteifigkeit auf als die Druckfeder 5. In der Konfiguration gemäß der Fig. 1 und 2 ist die erste Druckvorspannkraft der Druckfeder 5 nicht in der Lage, die Zugfeder 6 auseinanderzuziehen. Die Schraubenwindungen der als Schraubenfeder ausgebildeten Zugfeder 6 bewegen sich daher nicht auseinander und die auf das Zugfederende 12 übertragene Zugkraft wird in gleichbleibender Größe auf ein von der Druckfeder 5 abgewandtes Zugfederende 9 (siehe Fig. 2) der Zugfeder 6 übertragen. Die am Zugfederende 9 wirkende Zugkraft zieht über das Gelenk 27 den ersten Hebelarm 25 im Uhrzeigersinn um die Schwenkachse 4 des Winkelhebelteils 23 und drückt dadurch den ersten Hebelarm 25 gegen die Anschlagfläche 29.

In der Konfiguration gemäß Fig. 3 ist die Druckfeder 5 stärker komprimiert und erzeugt eine zweite Druckvorspannkraft, die größer ist als die erste Druckvorspannkraft gemäß Konfiguration der Fig. 1 und 2. Auch die zweite Druckvorspannkraft ist noch nicht groß genug, um über die Zugstange 8 die Zugfeder 6 zu dehnen. Die Schraubenwindungen der als Schraubenfeder ausgebildeten Zugfeder 6 werden in Fig. 3 nach wie vor noch nicht voneinander abgehoben. Die Andrucckraft, mit welcher das Winkelhebelteil 3 im Uhrzeigersinn um die Schwenkachse 4 an die Anschlagfläche 29 gedrückt wird, ist in der Konfiguration gemäß Fig. 3 entsprechend der größeren, zweiten Druckvorspannkraft der Druckfeder 5 größer als in der Konfiguration gemäß der Fig. 1 und 2.

Wird das Arbeitsgerät in den Fig. 1 bis 3 nach unten in Kontakt mit dem Boden 28 bewegt oder trifft der Zinken 2 bei seiner Bewegung entlang des Bodens in Zugrichtung ZR auf Unebenheiten oder Hindernisse, so wirkt auf den Zinken 2 sowie auf das Winkelhebelteil 23 ein Auslenkdrehmoment, welches danach trachtet, das Winkelhebelteil 23 im Gegenuhrzeigersinn um die Schwenkachse 4 zu verschwenken bzw. auszulenken.

Hat dieses Auslenkdrehmoment eine solche an dem Zugfederende 9 in den Fig. 1 bis 3 nach links unten ziehende Zugkraft zur Folge, die im Falle der Konfiguration gemäß der Fig. 1 und 2 größer ist als die erste Druckvorspannkraft der Druckfeder 5 bzw. die im Falle der Konfiguration gemäß Fig. 3 größer ist als die zweite Druckvorspannkraft der Druckfeder 5, so dreht sich das Winkelhebelteil 23 in den Fig. 1 bis 3 im Gegenuhrzeigersinn um einen Auslenkwinkel um die Schwenkachse 4. Dabei bewegt sich die von der Zugfeder 6 gezogene Zugstange 8 durch die Einstellstange 11 nach links unten und zieht dabei das Druckfederende 7 in Richtung des Druckfederendes 10. Dementsprechend wird die Druckfeder 5 noch weiter zusammengedrückt und ihre Druckvorspannkraft erhöht sich bis wieder ein Gleichgewicht der auf das Winkelhebelteil 23 wirkenden Drehmomente erreicht ist.

Mit zunehmender Auslenkbewegung des Zinken 2, d.h. mit zunehmender Drehbewegung des Winkelhebelteils 23 im Gegenuhrzeigersinn um die Schwenkachse 4, kann irgendwann ein Auslenkzustand des Zinken 2 erreicht werden, in welchem die Druckfeder 5 so stark komprimiert ist, dass ihre entsprechend große Druckvorspannkraft beginnt, die Zugfeder 6, die eine größere Federsteifigkeit aufweist als die Druckfeder 5, auseinanderzuziehen. Die Schraubenwindungen der als Schraubenfeder ausgebildeten Zugfeder 6 heben sich dann voneinander ab. Die auf das Zugfederende 9 bzw. das Gelenk 27 wirkende Zugkraft der Andrückvorrichtung 3 wird dadurch noch weiter erhöht. Das Ausmaß derjenigen Auslenkung des Zinken 2, bei welcher die Zugfeder 6 mit der größeren Federsteifigkeit beginnt, sich zu dehnen, wird im Rahmen der vorliegenden Erfindung als Schwellwertauslenkung bezeichnet. Je nach Bedarf im Einzelfall kann die Größe der Schwellwertauslenkung durch geeignete Wahl der Federsteifigkeiten bzw. Elastizitätsmodule der Zugfeder 6 und der Druckfeder 5 relativ zueinander vorgegeben werden. Denkbar ist beispielsweise eine solche Wahl der Federsteifigkeiten, dass sich die Zugfeder 6 bereits zu denen beginnt, wenn die Druckfeder 5 noch nicht vollständig komprimiert wurde.

Denkbar ist jedoch auch, dass die Zugfeder 6 erst dann gedehnt werden kann, wenn die Druckfeder 5 vollständig komprimiert wurde, d.h. deren Schraubenwindungen aneinander anliegen. Die Federsteifigkeit der Druckfeder 5 ist dann im Verhältnis zu der Federsteifigkeit der Zugfeder 6 so gering, dass selbst eine vollständig komprimierte Druckfeder 5 noch keine so große Druckvorspannkraft erzeugen kann, welche die Zugfeder 6 auseinanderzieht.

Das Bewegen bzw. Einstellen des Einstellelements in Form der Einstellstange 11 bzw. der weiteren Einstellstangen 31 bis 34 erfolgt bei dem gezeigten Ausführungsbeispiel mit Hilfe eines länglichen Schlittenelements 14, an welchem die Einstellstangen 11 bzw. 31 bis 34 befestigt sind. Außerhalb des oberen Endes der Fig. 4 befindet sich ein nicht gezeigtes, weiteres Schlittenelement, das spiegelsymmetrisch zu dem gezeigten Schlittenelement 14 ausgebildet bzw. angeordnet ist. Das Schlittenelement 14 bzw. das weitere, nicht gezeigte Schlittenelement ist in einer Langlochführung verfahrbar an dem Grundträger 15 bzw. dem weiteren, nicht gezeigten Grundträger gelagert.

Wie am besten in den Fig. 1 bis 3 zu erkennen ist, besteht die Langlochführung bei dem gezeigten Ausführungsbeispiel aus zwei Langlöchern 30 und 35, die in dem Grundträger 15 bzw. dem weiteren, nicht gezeigten Grundträger derart ausgebildet sind, dass das Schlittenelement 14 bzw. das weitere, nicht gezeigte Schlittenelement entlang der Langlöcher 30 und 35 bewegt werden kann. Das Schlittenelement 14 wird bei dem gezeigten Ausführungsbeispiel mit Hilfe von Rollenscheiben 36 bzw. 37 in dem Langloch 30 bzw. 35 gehalten.

Das Bewegen des Schlittenelements 14 bzw. des weiteren, nicht gezeigten Schlittenelements entlang der Langlöcher 30 und 35 erfolgt vorzugsweise kraftunterstützt. Wie in den Fig. 1 bis 3 zu sehen ist, kann hierfür ein kraftunterstütztes Betätigungsorgan beispielsweise in Form wenigstens eines Hydraulikzylinders 13 verwendet werden. Der Hydraulikzylinder 13 kann mittelbar oder unmittelbar mit seiner Kolbenstange an dem Schlittenelement 14 bzw. dem weiteren, nicht gezeigten Schlittenelement angreifen und eine Bewegung der Einstellstange 11 bzw. der Einstellstangen 31 bis 34 aus der in Fig. 1 gezeigten Konfiguration in die in Fig. 3 gezeigte Konfiguration bewirken.

### BEZUGSZEICHENLISTE

- 1: Landwirtschaftliches Arbeitsgerät
- 2: Arbeitswerkzeug, Zinken
- 3: Andrückvorrichtung
- 4: Schwenkachse 4
- 5: Druckfeder
- 6: Zugfeder
- 7: Abgewandtes Druckfederende der Druckfeder 5
- 8: Zugstange
- 9: Abgewandtes Zugfederende der Zugfeder 6
- 10: Zugewandtes Druckfederende der Druckfeder 5
- 11: Einstellelement, Einstellstange
- 12: Zugewandtes Zugfederende der Zugfeder 6
- 13: Betätigungsorgan, Hydraulikzylinder
- 14: Schlittenelement
- 15: Grundträger
- 16: Trägerstange
- 17: Trägerstange
- 18: Trägerstange
- 19: Trägerstange
- 20: Trägerstange
- 21: Trägerstange
- 22: Schwenklagereinrichtung
- 23: Winkelhebelteil der Schwenklagereinrichtung 22
- 24: Anschlagteil der Schwenklagereinrichtung 22
- 25: Erster Hebelarm des Winkelhebelteils 23
- 26: Zweiter Hebelarm des Winkelhebelteils 23
- 27: Gelenk zwischen Zugfeder 6 und erstem Hebelarm 25
- 28: Landwirtschaftlicher Boden
- 29: Anschlagfläche an dem Anschlagteil 24
- 30: Langloch in dem Grundträger 15
- 31: Einstellstange
- 32: Einstellstange
- 33: Einstellstange
- 34: Einstellstange
- 35: Langloch in dem Grundträger 15
- 36: Rollenscheibe
- 37: Rollenscheibe

- ZR: Zugrichtung des Zugfahrzeuges

## Patentansprüche

1. Landwirtschaftliches Arbeitsgerät (1) zum Bearbeiten eines Bodens (28), umfassend wenigstens ein um eine Schwenkachse (4) auslenkbares Arbeitswerkzeug (2) und eine Andrückvorrichtung (3) zum Andrücken des wenigstens einen Arbeitswerkzeuges (2) an den Boden (28), wobei die Andrückvorrichtung (3) eine Druckfeder (5) und eine Zugfeder (6) zum Erzeugen einer Andruckkraft aufweist, und wobei mit Beginn einer Auslenkbewegung des Arbeitswerkzeuges (2) zunächst die Druckfeder (5) zumindest teilweise komprimiert wird und ab Erreichen einer Schwellwertauslenkung des Arbeitswerkzeuges (2) die Zugfeder (6) gedehnt wird, **dadurch gekennzeichnet, dass**
die Druckfeder (5) außerhalb der Zugfeder (6) angeordnet ist, ein von der Zugfeder (6) abgewandtes Druckfederende (7) derart mittels einer Zugstange (8) mit der Zugfeder (6) verbunden ist, dass ein Ziehen an einem von der Druckfeder (5) abgewandten Zugfederende (9) eine Zugkraft auf das abgewandte Druckfederende (7) bewirkt, und sich ein der Zugfeder (6) zugewandtes Druckfederende (10) an einem Einstellelement (11) zum Einstellen der Vorspannung der Druckfeder (5) abstützt, wobei das Einstellelement (11) zwischen dem zugewandten Druckfederende (10) und einem der Druckfeder (5) zugewandten Zugfederende (12) angeordnet ist.

2. Arbeitsgerät (1) nach Anspruch 1,
**dadurch gekennzeichnet, dass**
eine Längsachse der Druckfeder (5) mit einer Längsachse der Zugfeder (6) fluchtet.

3. Arbeitsgerät (1) nach Anspruch 1 oder 2,
**dadurch gekennzeichnet, dass**
die Zugstange (8) das Einstellelement (11) durchsetzt und dadurch in dem Einstellelement (11) bewegbar geführt ist.

4. Arbeitsgerät (1) nach einem der vorangehenden Ansprüche,
**dadurch gekennzeichnet, dass**
das Arbeitsgerät (1) ein kraftunterstütztes Betätigungsorgan (13) umfasst, mittels welchem das Einstellelement (11) in verschiedene Einstellpositionen relativ zu dem abgewandten Druckfederende (7) bewegbar ist, wobei verschiedene Einstellpositionen jeweils eine unterschiedliche Vorspannung der Druckfeder (5) bewirken.

5. Arbeitsgerät (1) nach Anspruch 4,
**dadurch gekennzeichnet, dass**
das Einstellelement (11) an wenigstens einem Schlittenelement (14) gelagert ist, welches zum Bewegen des Einstellelements (11) in verschiedene Einstellpositionen mittels des Betätigungsorgans (13) verfahrbar ist.

6. Arbeitsgerät (1) nach Anspruch 5,
**dadurch gekennzeichnet, dass**
das Schlittenelement (14) in einer Langlochführung (30, 35) verfahrbar gelagert ist.
